(19)

Europäisches Patentamt
European Patent Office
Office européen des brevets

(11) **EP 2 012 444 A2**

(12) **EUROPEAN PATENT APPLICATION**

(43) Date of publication:
**07.01.2009 Bulletin 2009/02**

(51) Int Cl.:
**H04B 7/06** (2006.01)

(21) Application number: **08158300.7**

(22) Date of filing: **16.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.07.2007 JP 2007176210**

(71) Applicant: **NEC CORPORATION**
**Tokyo (JP)**

(72) Inventor: **Kikuma, Tomohiro**
**Tokyo (JP)**

(74) Representative: **Betten & Resch**
**Patentanwälte**
**Theatinerstrasse 8**
**(Fünf Höfe)**
**80333 München (DE)**

(54) **Transmitter and transmitting method**

(57)      A transmitter performs a test to determine antennas which are possible to output transmission signals each satisfying a predetermined reception quality out of among a plurality of antennas. The transmitter recognizes candidates of amplifiers connected to the antennas determined by the test from among a plurality of amplifiers amplifying transmission signals by amplification characteristics having different saturated output powers, respectively. The transmitter sets higher ranks to candidates having amplification characteristic of lower saturated output powers, and selects a specified number of amplifiers from among the candidates given the higher ranks. The transmitter performs a transmission processing on the transmission signals using the selected specified number of amplifiers and the antennas connected to the specified number of amplifiers, respectively.

FIG.1

EP 2 012 444 A2

## Description

This application is based upon and claims the benefit of priority from Japanese patent application No. 2007-176210, filed on July 4, 2007, the disclosure of which is incorporated herein in its entirety by reference.

BACKGROUND OF THE INVENTION

Field of the Invention

The present invention relates to a transmitter including a plurality of antennas and a transmission method by the transmitter.

Description of the Related Art

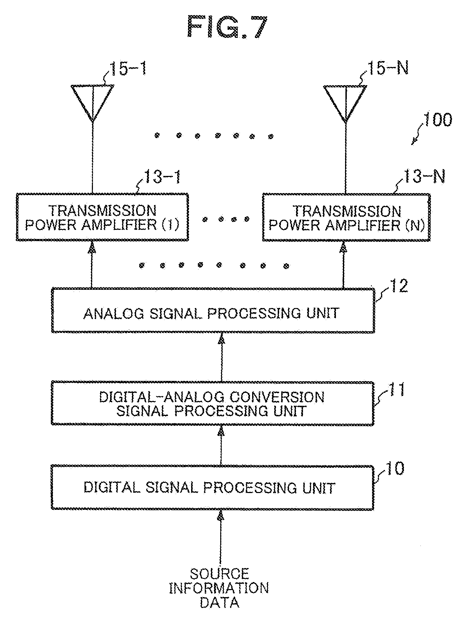

FIG. 7 shows a configuration of an ordinary transmitter 100 including a plurality of antennas. In FIG. 7, the number of antennas of the transmitter 100 is denoted by N (N > 1). In the transmitter 100, a digital signal processing unit 10 carries source information data out a digital signal processing. A digital-analog conversion processing unit 11 converts the resultant digital signal into an analog signal. An analog signal processing unit 12 processes the signal from the digital-analog conversion processing unit 11. Transmission power amplifiers 13-1 to 13-N (hereinafter, also "amplifier 13") amplify the resultant analog signal, respectively. The amplified signals are radiated into the air from antennas 15-1 to 15-N (hereinafter, also "antennas 15"), respectively.

Generally, a person having ordinary skill in the art could easily realize that higher modulation accuracy is required if a transmission rate Yper unit frequency and/or per antenna is higher in the transmitter (100). Causes for deteriorating the modulation accuracy include, for example, nonlinear strains in the transmission power amplifiers 13-1 to 13-N and phase noise generated by an oscillator.

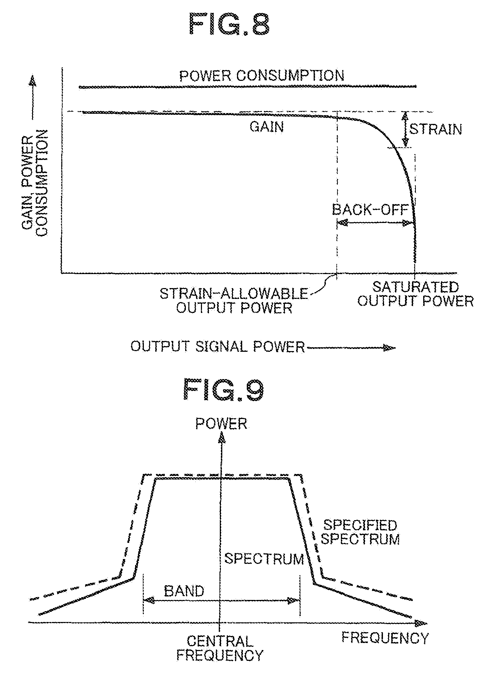

FIG. 8 shows the relationship between output power and amplifier gain and power consumption in the ordinary transmission power amplifier such as the transmission power amplifier 13. The "gain" in the vertical axis of the graph of FIG. 8 represents a ratio of input power to output power of the transmission power amplifier. To amplify an input signal without strain, the gain is desirably constant irrespectively of the output power.

However, there is an upper limit ("saturated output power") of the output power from the transmission power amplifier. Due to this, as shown in FIG. 8, even if the input power of the transmission power amplifier is increased, the increase in the output power peaks near the saturated output power. In this case, an amplifier strain is generated, resulting in quality degradation of the transmission signal. To suppress such a quality degradation of the transmission signal, it is necessary to set back-off between the saturated output signal and the upper limit to the output power which can allow an amplifier strain.

Power consumption P_dc of the transmission power amplifier 13 (13-1 to 13-N) is expressed by the following Equation (1) if the output power from the transmission power amplifier 13 is P_out.

$$ P\_dc = P\_sat/\eta\_max \quad ...(1) $$

In the Equation (1), P_sat indicates the saturated output power and $\eta$_max indicates maximum efficiency decided by a configuration of the amplifier 13. If the maximum efficiency $\eta$_max is fixed, the power consumption P_dc of the transmission power amplifier 13 depends on the saturated power of the amplifier 13 and does not depend on the back-off. As shown in FIG. 8, the power consumption is constant without dependence on the back-off.

On the other hand, as shown in FIG. 8, the degree of the nonlinear strain of the signal generated in the transmission power amplifier 13 depends on the back-off. Specifically, if the back-off is larger, the degree of the nonlinear strain is higher and modulation accuracy is higher. If the transmission rate is to be increased by increasing a modulation level to, for example, BPSK -> QPSK -> 16QAM -> 64QAM, the back-off for satisfying the modulation accuracy is increased in order of BPSK -> QPSK -> 16QAM - > 64QAM.

According to IEEE802.11a that is the high-speed wireless LAN specification, required modulation accuracies are -5 dB, -8 dB, -10 dB, -13 dB, -16 dB, -19 dB, -22 dB, and -25 dB for transmission rate modes of 6 Mbps (BPSK coding rate 1/2), 9 Mbps (BPSK coding rate 3/4), 12 Mbps (QPSK coding rate 1/2), 18 Mbps (QPSK coding rate 3/4), 24 Mbps (16QAM coding rate 1/2), 36 Mbps (16QAM coding rate 3/4), 48 Mbps (64QAM coding rate 2/3), and 54 Mbps (64QAM coding rate 3/4) per 20-MHz band, respectively. In this way, a higher modulation accuracy is required if the transmission rate is higher.

Furthermore, if the saturated output power (P_sat) is higher, a physical size of the transmission power amplifier 13 (13-1 to 13-N) and a thermal tolerance cost in response to an increase in power consumption increase. A method of reducing the back-off while satisfying the required modulation accuracy so as to cut off cost is disclosed in, for example, Japanese Patent Application National Publication (Laid-Open) No. 2005-534268 to be described later. The Japanese Patent Application National Publication (Laid-Open) No. 2005-534268 discloses a method of processing an input signal to an amplifier in advance so as to prevent a high input signal from being input to the amplifier.

General specifications for the transmitter (e.g., the transmitter 100) in a wireless transmission system will be described. The transmitter is configured to satisfy specifications for the wireless transmission system provided to correspond to different frequency bands, respectively. Specifically, the specifications include specifications related to spectral mask (also known as "transmission mask") such as a central frequency, a frequency band, and a channel leakage power, as well as maximum transmission power and modulation strain specifications.

FIG. 9 shows transmission spectrums of an ordinary transmitter including a plurality of antennas. In FIG. 9, a solid line indicates the transmission spectrum of the transmitter and a broken line indicates a specified transmission spectrum. A signal (indicated by the solid line) transmitted from each antenna of the transmitter satisfies the spectrum specification (indicated by the broken line).

A maximum transmission power Tx_max_Pow of the transmitter including a plurality of antennas is defined by the following Expression (2) if the number of transmission antennas used by the transmitter is N and an average transmission power per antenna is Tx_pow.

$$N \times \mathrm{Tx\_Pow} \leq \mathrm{Tx\_max\_Pow} \quad ...(2)$$

Transmission power amplifiers having equivalent performances are arranged to correspond to a plurality of antennas in the transmitter including the antennas because of easy installment of the amplifiers in a plurality of antenna-related systems, respectively. Whichever antenna-related system is selected, the corresponding transmission power amplifier operates so that a signal transmitted from the selected antenna-related system satisfies the transmission specifications.

A total transmission power of the transmitter "N x Tx_Pow" shown in the Expression (2) is preferably raised up to the maximum transmission power (Tx_max_Pow) of the transmitter within a range satisfying the transmission specifications with views of expanding communication area. If the Expression (2) is transformed to an expression in units of decibels (dB) and paraphrased with respect to Tx_Pow, the following Equation (3) is obtained.

$$\mathrm{Tx\_Pow} = \mathrm{Tx\_max\_Pow} \cdot 10 \times \log 10\,(N)\,[\mathrm{dB}] \quad ...(3)$$

The Equation (3) signifies that it is necessary to change the average transmission power Tx_Pow per antenna according to the number N of antennas used in communication so that the transmitter including a plurality of antennas satisfies the specifications of transmission power. It is to be noted that reduction in the average transmission power (Tx_Pow) per antenna is equivalent to setting of the back-off large in FIG. 8.

The following Table-1 shows the relationship between the number N of antennas used by the transmitter and the average transmission power Tx_Pow of the respective antennas. As clear from the Table-1, if the number N of transmission antennas is 10, i.e., N=10, it is necessary to increase the average transmission power Tx_Pow by 10 dB from the average transmission power Tx_Pow of one antenna (N=1), i.e., increase the back-off by 10 dB per antenna.

[Table-1]

| Number of transmission antennas N | Transmission power of each antenna-related system Tx_Pow [dB] |
|---|---|
| 1 | Tx_max_Pow -0.0 |
| 2 | Tx_max_Pow -3.0 |
| 3 | Tx_max_Pow -4.8 |
| 4 | Tx_max_Pow -6.0 |
| . . . | . . . |

(continued)

| Number of transmission antennas N | Transmission power of each antenna-related system Tx_Pow [dB] |
|---|---|
| 10 | Tx_max_Pow -10.0 |

As already stated above, in the ordinary transmitter including a plurality of antennas, the transmission power amplifiers equivalent in performance are connected to the antennas, respectively. However, even if transmission operation is performed using one antenna, the corresponding transmission power amplifier operates according to the setting of the back-off to be able to ensure the modulation accuracy corresponding to the highest modulation level. Due to this, if a plurality of antennas is used for transmission, it is necessary to forcibly increase the back-off in light of the maximum transmission power (Tx_max_Pow).

As stated, if the back-off is made larger, then the modulation strain of the transmission power amplifier is reduced and the modulation accuracy is improved. However, factors deciding the modulation accuracy include not only the back-off but also fixed deterioration such as the phase noise of the oscillator. Due to this, even if the back-off is increased to reduce phase strain, the fixed deterioration such as the phase deterioration hampers the improvement in the modulation accuracy. This matter means consumption of an installation area of the transmission power amplifiers and consumption of power, which eventually prevents downsizing of the transmitter and the long service life of a battery.

SUMMARY OF THE INVENTION

The present invention has been made to solve the conventional problems. It is an object of the present invention to provide a technique for a transmitter including a plurality of antennas capable of reducing power consumption while satisfying modulation accuracy necessary for communication.

According to one aspect of the present invention, there is provided a transmitter comprising: a signal generation unit generating transmission signals by performing a signal processing, including coding and modulation, on data to be transmitted; a plurality of amplifiers amplifying the transmission signals by amplification characteristics having different saturated output powers, respectively; a plurality of antennas outputting the transmission signals amplified by the plurality of amplifiers, respectively; a switch connecting the plurality of amplifiers and the plurality of antennas in pairs; and a transmission control unit performing a test to determine antennas which are possible to output transmission signals each satisfying a predetermined reception quality from among the plurality of antennas, recognizing candidates of amplifiers connected to the antennas determined by the test, and selecting a specified number of amplifiers from among the candidates, wherein the transmission control unit sets higher ranks to candidates having the amplification characteristics of lower saturated output powers, applies the candidates given the higher ranks to the specified number of amplifiers, and performs a transmission processing using the specified number of amplifiers and the antennas connected to the specified number of amplifiers, respectively.

According to another aspect of the present invention, there is provided a transmission method comprising: performing a test to determine antennas which are possible to output transmission signals each satisfying a predetermined reception quality out of a plurality of antennas; recognizing candidates of amplifiers connected to the antennas determined by the test from among a plurality of amplifiers amplifying transmission signals by amplification characteristics having different saturated output powers, respectively; setting higher ranks to candidates having amplification characteristic of lower saturated output powers, and selecting a specified number of amplifiers from among the candidates given the higher ranks; generating transmission signals by performing a signal processing, including coding and modulation, on data to be transmitted; and performing a transmission processing on the generated transmission signals using the selected specified number of amplifiers and the antennas connected to the specified number of amplifiers, respectively.

According to the present invention, it is possible to select amplifiers in view of the relationship between a communication quality and power consumption for a transmission processing performed by the transmitter. It is thereby possible to reduce the power consumption while satisfying the quality necessary for the communication.

BRIEF DESCRIPTION OF THE DRAWINGS

FIG. 1 is a block diagram showing a configuration of a transmitter according to an embodiment of the present invention;
FIG. 2 is an explanatory diagram related to amplification characteristics of the transmitter according to the embodiment;
FIG. 3 is a signal point arrangement diagram of the amplifiers (output setting: HIGH) according to the embodiment;
FIG. 4 is a signal point arrangement diagram of the amplifiers (output setting: LOW) according to the embodiment;

FIG. 5 is a flowchart showing operation according to the embodiment;
FIG. 6 is a flowchart related to amplifier selection according to the embodiment;
FIG. 7 is a block diagram showing a configuration of an ordinary transmitter;
FIG. 8 is a graph showing the relationship between output power from the ordinary amplifier and power consumption of the ordinary amplifier; and
FIG. 9 is a graph explaining an ordinary transmission spectrum.

DETAILED DESCRIPTION OF THE INVENTION

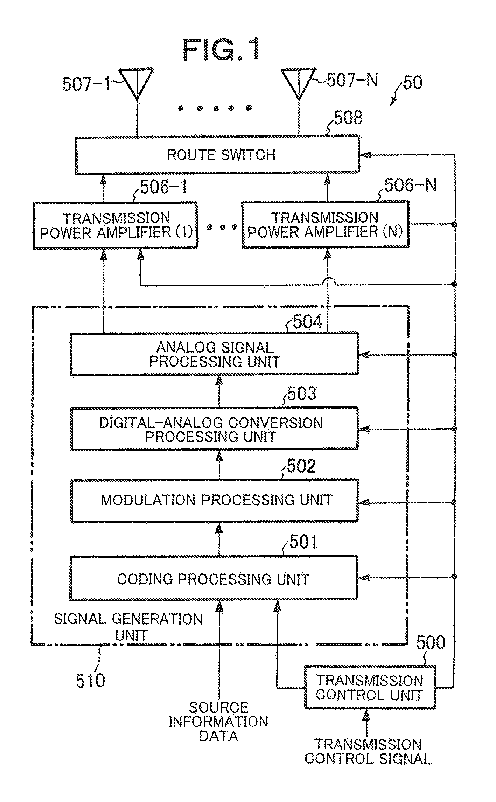

FIG. 1 shows a configuration of a transmitter 50 according to an embodiment of the present invention. A signal generation unit 510 generates a transmission signal from data to be transmitted ("SOURCE INFORMATION DATA"). N units of transmission power amplifiers 506-1 to 506-N, amplify the transmission signal using different amplification characteristics, respectively. N units of antennas 507-1 to 507-N radiate the amplified transmission signals into the air, respectively. A route switch 508 connects a pair of one of the transmission power amplifiers 506-1 to 506-N and one of the antennas 507-1 to 507-N. Operations performed by these constituent elements of the transmitter 50 are controlled by a transmission control unit 500.

As shown in FIG. 1, the signal generation unit 510 is configured to include a coding processing unit 501, a modulation processing unit 502, a digital-analog conversion processing unit 503, and an analog signal processing unit 504.

The coding processing unit 501 carries the source information data out a coding processing based on information of a coding rate supplied from the transmission control unit 500 and antenna information on the antennas. The modulation processing unit 502 performs a multilevel modulation processing, such as BPSK, QPSK, 16QAM and 64 QAM, based on information of a modulation level and the antenna information supplied from the transmission control unit 500. The digital-analog conversion processing unit 503 converts the digital signal from the modulation processing unit 502 into an analog signal according to the antenna information supplied from the transmission control unit 500. The analog signal processing unit 504 performs a predetermined signal processing on the analog signal from the digital-analog conversion processing unit 503 according to the antenna information supplied from the transmission control unit 500 and outputs the processed analog signal as a transmission signal.

The transmission power amplifiers 506-1 to 506-N amplify the transmission signal from the signal generation unit 510 based on the antenna information supplied from the transmission control unit 500, respectively. The antennas 507-1 to 507-N radiate outputs from the transmission power amplifiers 506-1 to 506-N connected thereto by the route switch 508 into the air as wireless signals, respectively.

The route switch 508 connects the transmission power amplifiers 506-1 to 506-N and the antennas 507-1 to 507-N in pairs using route switching information supplied from the transmission control unit 500. Preferably, some of the antennas 507-1 to 507-N that are not used for the transmission processing are not connected to the corresponding amplifiers 506-1 to 506-N for saving of the power consumption.

Amplification characteristics of the transmission power amplifiers 506-1 to 506-N included in the transmitter 50 configured as stated above will be described. For brevity of description, it is assumed that the number N of antennas is four (N=4). A back-off value set to each of the transmission power amplifiers 506-1 to 506-N is defined as Bo. The Bo is a back-off value satisfying specifications of modulation accuracy if the number of transmission antennas is four. In this example, four transmission power amplifiers to 4 to which different saturated output powers P_sat(1) to P_sat(4) are set, respectively are prepared. The saturated output powers P_sat(1) to P_sat(4) are expressed by the following Equations (4) to (7), respectively.

Transmission power amplifier 1:

$$\text{Saturated output power 1} \quad \text{P\_sat}(1) = \text{Tx\_max\_Pow} + \text{Bo-}10 \times \log 10$$
$$(N=1) \text{ [dB]} = \text{Tx\_max\_Pow} + \text{Bo-}0.0 \text{ [dB]} \quad \dots (4)$$

Transmission power amplifier 2:

$$\text{Saturated output power 2} \quad \text{P\_sat}(2) = \text{Tx\_max\_Pow} + \text{Bo-}10 \times \log 10$$
$$(N=2) \text{ [dB]} = \text{Tx\_max\_Pow} + \text{Bo-}3.0 \text{ [dB]} \quad \dots (5)$$

Transmission power amplifier 3:

$$\text{Saturated output power 3} \quad \text{P\_sat(3)} = \text{Tx\_max\_Pow+Bo-}10 \times \log 10$$

$$(\text{N=3}) \text{ [dB]} = \text{Tx\_max\_Pow+Bo-}4.8 \text{ [dB]} \quad \ldots(6)$$

Transmission power amplifier 4:

$$\text{Saturated output power 4} \quad \text{P\_sat(4)} = \text{Tx\_max\_Pow+Bo-}10 \times \log 10$$

$$(\text{N=4}) \text{ [dB]} = \text{Tx\_max\_Pow+Bo-}6.0 \text{ [dB]} \quad \ldots(7)$$

In this case, the saturated output powers P_sat(1) to P_sat(4) can be paraphrased to the following Expressions (8) to (11), respectively based on "P_sat(1) = Tx_max_Pow+Bo" in the Equation (4).

$$\text{Saturated output power 1: P\_sat(1) [dB]} \quad \ldots(8)$$

$$\text{Saturated output power 2: P\_sat(2)} = \text{P\_sat(1)-}3.0 \text{ [dB]} \quad \ldots(9)$$

$$\text{Saturated output power 3: P\_sat(3)} = \text{P\_sat(1)-}4.8 \text{ [dB]} \quad \ldots(10)$$

$$\text{Saturated output power 4: P\_sat(4)} = \text{P\_sat(1)-}6.0 \text{ [dB]} \quad \ldots(11)$$

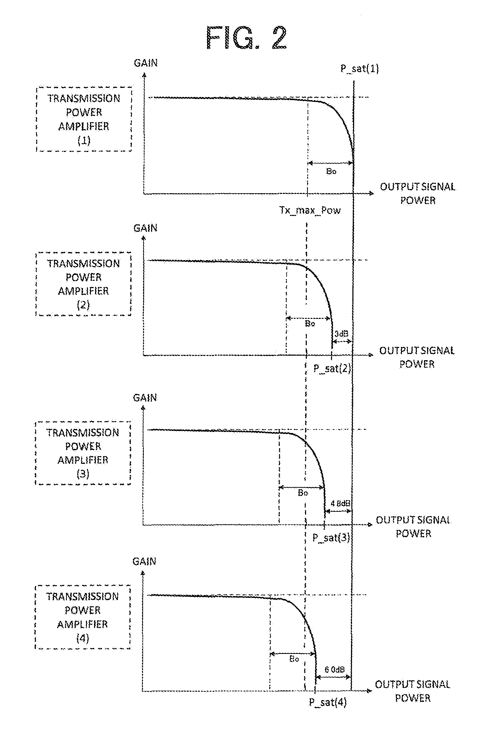

FIG. 2 shows characteristics indicated by the Expressions (8) to (11).
A total power consumption Total_Pdc of the four transmission power amplifiers 1 to 4 having the characteristics expressed by the Expressions (8) to (11), respectively is expressed by the following Equation (12) if a true value of the saturated output power P_sat(1) is p_sat.

$$\text{Total\_Pdc} = (1+1/2+1/3+1/4) \times \text{p\_sat} = 2.08 \times \text{p\_sat} \quad \ldots(12)$$

If the four transmission power amplifiers 1 to 4 are identical in characteristics, the total power consumption Total_Pdc of the four transmission power amplifiers 1 to 4 is expressed by the following Equation (13).

$$\text{Total\_Pdc} = (1+1+1+1) \times \text{p\_sat} = 4 \times \text{p\_sat} \quad \ldots(13)$$

According to the Equations (12) and (13), the total power consumption Total_Pdc of the four transmission power amplifiers 1 to 4 having the characteristics expressed by the Expressions (8) to (11) is reduced to about 52% (=2.08/4.0) as compared with Total_Pdc of these amplifiers 1 to 4 which have the identical characteristics. Furthermore, an installation or occupation area of the four transmission power amplifiers 1 to 4 can be reduced. For brevity of description, it is assumed that η_max in the Equation (1) is a fixed value.
A method of deciding an optimum antenna-related system from among those including the transmission power amplifiers 506-1 to 506-N and the antennas 507-1 to 507-N from viewpoints of high communication quality and low power consumption will be described.

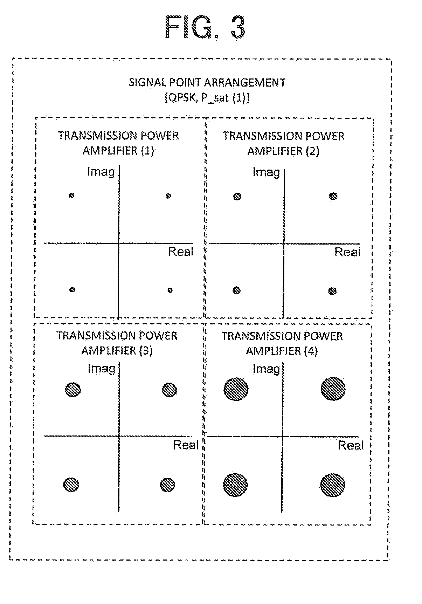

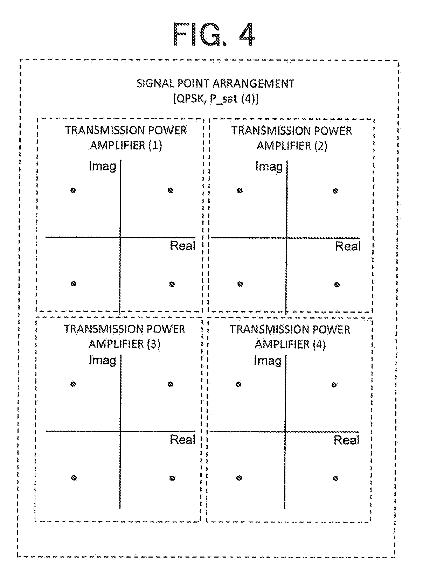

Figs. 3 and 4 show signal point distributions of transmission signals if the four transmission power amplifiers 1 to 4 are used. In each of Figs. 3 and 4, the modulation scheme is QPSK and a magnitude of a signal point circle indicates a magnitude of errors of imaginary signal points relative to real signal points. FIG. 3 shows the signal point distribution if the output power from each of the four transmission power amplifiers 1 to 4 is P_sat(1) shown in FIG. 2. FIG. 4 shows the signal point distribution if the output power from each of the four transmission power amplifiers 1 to 4 is P_sat(4) shown in FIG. 2.

It is assumed that the transmission power P_sat(1) is higher than P_sat(4) and that the total number of antennas used for the transmission processing is one. As shown in FIG. 3, at P_sat(1), the errors in signal points are greater if the maximum transmission powers of the transmission power amplifiers 1 to 4 are lower, that is, in order of the amplifiers 1, 2, 3, and 4. This means that the modulation accuracy is deteriorated and the communication quality is degraded if the maximum transmission power is reduced.

On the other hand, the power consumption is reduced in order of the transmission power amplifiers 4, 3, 2, and 1. If the power consumption is lower, battery duration is advantageously longer. In other words, the power consumption and the communication quality hold a tradeoff relationship. Therefore, an optimum transmission power amplifier is selected based on a reception quality of a receiver with which the transmitter communicates.

If P_sat(4) is selected as the output power, P_sat(4) is lower than P_sat(1), so that signals can be transmitted simultaneously from all of the four antennas. In this case, as shown in FIG. 4, all the transmission power amplifiers 1 to 4 can ensure sufficient linearity in the amplification characteristics. Due to this, signal point errors are small and sufficiently high modulation accuracy can be obtained.

The following Table-2 shows combinations of the transmission power amplifiers 506-1 to 506-N and the antennas 507-1 to 507-N if the total number N of antennas included in the transmitter 50 shown in FIG. 1 is four (N=4). As shown in the Table-2, 15 combinations of amplifier/antenna (15 candidates of amplifier/antenna) are present.

[Table-2]

| Candidate No. | Number of transmission antennas | Transmission power amplifier 1 (maximum power consumption-highest transmission quality) | Transmission power amplifier 2 | Transmission power amplifier 3 | Transmission power amplifier 4 (minimum power consumption-lowest transmission quality) |
|---|---|---|---|---|---|
| 1 | 1 | ✓ | - | - | - |
| 2 | 1 | - | ✓ | - | - |
| 3 | 1 | - | - | ✓ | - |
| 4 | 1 | - | - | - | ✓ |
| 5 | 2 | ✓ | ✓ | - | - |
| 6 | 2 | ✓ | - | ✓ | - |
| 7 | 2 | ✓ | - | - | ✓ |
| 8 | 2 | - | ✓ | ✓ | - |
| 9 | 2 | - | ✓ | - | ✓ |
| 10 | 2 | - | - | ✓ | ✓ |
| 11 | 3 | ✓ | ✓ | ✓ | - |
| 12 | 3 | ✓ | ✓ | - | ✓ |
| 13 | 3 | ✓ | - | ✓ | ✓ |
| 14 | 3 | - | ✓ | ✓ | ✓ |
| 15 | 4 | ✓ | ✓ | ✓ | ✓ |

According to the Table 2, if only one antenna is used, a candidate No. "1" using the transmission power amplifier 1 shows the maximum power consumption and the highest transmission quality, and a candidate No. "4" using the transmission power amplifier 4 shows the minimum power consumption and the lowest transmission quality. Likewise, if two antennas are used, a candidate No. "5" using the transmission power amplifiers 1 and 2 shows the maximum power consumption and the highest transmission quality and a candidate No. "10" using the transmission power amplifiers 3 and 4 shows the minimum power consumption and the lowest transmission quality. Furthermore, if three antennas are used, a candidate No. "11" using the transmission power amplifiers 1, 2, and 3 shows the maximum power consumption and the highest transmission quality and a candidate No. "14" using the transmission power amplifiers 2, 3 and 4 shows the minimum power consumption and the lowest transmission quality.

The transmission control unit 500 selects an optimum transmission power amplifier for the transmission processing to be performed with a right balance between the power consumption and the communication quality. For such the selection, the transmission control unit 500 carries out a test to determine antennas which are possible to output a transmission signal satisfying a predetermined reception quality out of the antennas 507-1 to 507-N. The transmission control unit 500 recognizes amplifiers connected to the determined antennas as candidates, and selects a specified number of amplifiers from among the candidates.

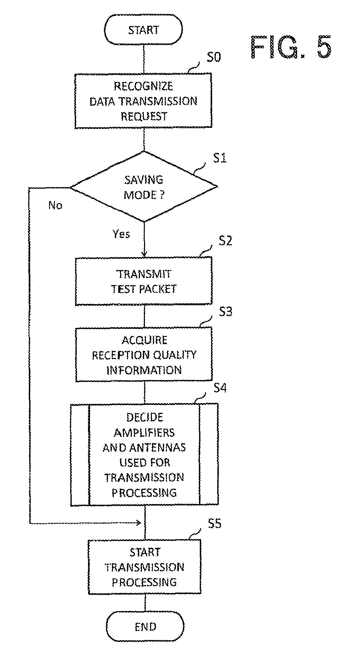

Referring to the flowchart of FIG. 5, an example of a control exerted by the transmission control unit 500 will be described. In the example, the combination of pairing between the transmission power amplifiers 506-1 to 506-N and the antennas 507-1 to 507-N is fixed.

If the transmission control unit 500 recognizes a data transmission request (step S0), the transmission control unit 500 determines whether a power saving mode is selected by a user's operation or the like before starting a transmission processing in response to the data transmission request (step S1).

If the power saving mode is selected, the transmission control unit 500 transmits test packets for testing whether at what qualities a receiver receives the signals transmitted from the respective antennas of the transmitter 50 to the receiver (step S2). The test packets are transmitted by using all the transmission power amplifiers 506-1 to 506-N and the antennas 507-1 to 507-N of the transmitter 50. The receiver that receives the test packets transmits information on quality of reception of the test packets (hereinafter "reception quality information") to the transmitter 50. The reception quality information includes information on communication path and rate of successful reception.

If the transmission control unit 500 acquires the reception quality information mentioned above (step S3), it selects some of the transmission power amplifiers 506-1 to 506-N as many as the number of antennas for the current transmission processing, and decides to use the selected amplifiers for the transmission processing (step S4). At this time, the transmission control unit 500 can perform an averaging processing related to the communication quality to improve quality estimation accuracy if necessary.

The transmission control unit 500 starts the transmission processing using the selected transmission power amplifiers and the antennas connected to the selected transmission power amplifiers (step S5).

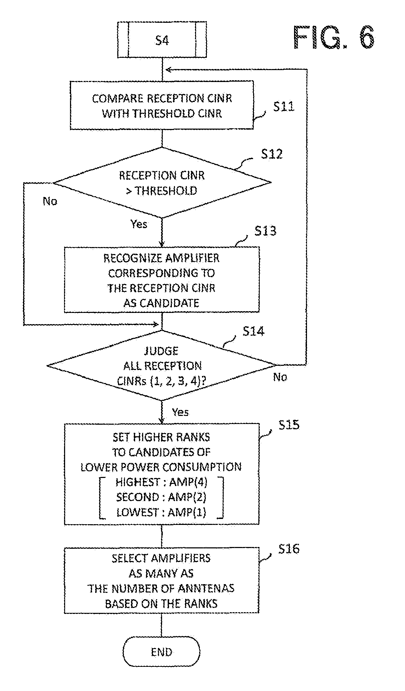

The amplifier selection procedure (step S4) will be described in detail with reference to the flowchart shown in FIG. 6. It is assumed in the following description that the total number N of antennas is four (N=4) and that the transmission power amplifiers 1, 2, 3, and 4 having the characteristics shown in FIG. 2 are connected to the antennas 1, 2, 3 and 4, respectively. Further, CINRs (Carrier to Interference plus Noise Ratios) are used as the reception quality information.

The transmission control unit 500 compares each of four reception CINRs (CINR1, CINR2, CINR3, and CINR4) acquired by the four antennas 1 to 4 with a threshold CINR (Th_CINR) preset as a determination threshold value (step S11). The threshold CINR is not limited to a fixed value but can be changed according to a coding rate, a modulation level, a transmission band or the like applied to the signal generation unit 510.

If the reception CINR is higher than the threshold CINR (step S12: Yes), the transmission control unit 500 recognizes that the transmission power amplifier corresponding to the reception CINR is effective to satisfy a communication quality standard. Then the transmission control unit 500 recognizes the transmission power amplifier as a candidate (step S13). If the reception CINR is equal to or lower than the threshold CINR (step S12: No), the transmission control unit 500 does not select the transmission power amplifier corresponding to the reception CINR as a candidate.

By making such the judgment using the threshold CINR, some transmission power amplifiers which bring an optimum quality of communication are sorted from the transmission power amplifiers 506-1 to 506-N.

By way of example about candidate selection, if the following Expression (14) is satisfied, the three transmission power amplifiers 1, 2, and 4 corresponding to the reception CINR1, CINR2, and CINR4 are recognized as candidates.

$$CINR2 > CINR1 > CINR4 > Th\_CINR > CINR3 \qquad ...(14)$$

If the judgment is completed with all the reception CINRs (CINR1, CINR2, CINR3, and CINR4) in the above-stated manner (step S14: Yes), the transmission control unit 500 sets ranks of the transmission power amplifiers 1, 2, and 4 selected as candidates in view of their power consumptions (step S15).

Specifically, the transmission control unit 500 sets a higher rank to the transmission power amplifier whose consumption power is lower, that is, whose P_sat (the saturated output power) is lower. As a result, the transmission power amplifier 4 is given the highest rank, the transmission power amplifier 2 is given the second highest rank, and the transmission power amplifier 1 is given the lowest rank according to the characteristics shown in FIG. 2.

The transmission control unit 500 selects amplifiers as many as the number of antennas for the current transmission processing (step S16). If the number of antennas is preset as one, the transmission power amplifier 4 is selected. Because the transmission power amplifier 4 is given the highest rank. Then the transmission power amplifier 4 and the antenna 4 connected to the transmission power amplifier 4 are used for the transmission processing.

If the number of antenna is preset as two, the transmission power amplifier 4 given the highest rank and the transmission power amplifier 2 given the second highest rank are selected. Then a combination of the transmission power amplifier 4 and the antenna 4, and that of the transmission power amplifier 2 and the antenna 2 are used for the transmission processing.

As stated so far, according to the embodiment, the transmission control unit 500 exerts control to select amplifier candidates using the reception quality information and to preferentially adopt candidates lower in power consumption for the transmission processing from among those candidates. It is thereby possible to select optimum amplifiers for the transmission processing in view of a balance between the communication quality and the power consumption.

While in the embodiment stated above, the CINRs are used as the reception quality information, it is possible to use other information as one. Furthermore, while the test packet is transmitted to test the reception quality of the transmission signal, another test method can be adopted. For example, a test method including calculating the rate of successful reception as to each antenna using information on notifying success in reception of data packets (ACK), information on notifying failure in reception of data packets (NACK) or the like, and comparing the probability with a determination threshold.

In the embodiment stated above, the combination of pairs of the transmission power amplifiers 506-1 to 506-N and the antennas 507-1 to 507-N is assumed to be fixed. However, the combination is not limited to the fixed one but can be changed if necessary. For example, some of the antennas to be used for the transmission processing are decided when starting the transmission processing, and are changed connections with amplifiers by the route switch 508 according to the selection of amplifiers. Such control is effective if the antennas of the transmitter 50 differ in their arrangement and radiation directions of radio wave.

The above-mentioned control in which the connection of antennas to the amplifiers is changed will be described while referring to an example of using the two amplifiers 1, 2 and the two antennas 1, 2. The following Table-3 shows combinations of pairing of the amplifiers and the antennas.

[Table-3]

| Transmission power amplifier | Antenna |
| --- | --- |
| Amplifier 1 | Antenna 1 |
| Amplifier 1 | Antenna 2 |
| Amplifier 2 | Antenna 1 |
| Amplifier 2 | Antenna 2 |

As shown in the Table-3, four combinations of pairing are present for the amplifiers (1, 2) and the antennas (1, 2). In the example, it is assumed to be initially set that the route switch 508 connects the amplifier 1 to the antenna 1, and connects the amplifier 2 to the antenna 2.

Now it is assumed that the amplifier 1 is selected as the transmission power amplifier for the transmission processing. According to the Table-3, there are two pairs as to the selected amplifier 1. Those are, a combination of the amplifier 1 and the antenna 1 as the initial setting, and the other combination of the amplifier 1 and the antenna 2. If the antenna 2 has been decided as the antenna used for the transmission processing since the beginning of that processing, the transmission control unit 500 controls the route switch 508 to connect the selected amplifier 1 with the antenna 2 instead of the antenna 1 as the initial setting.

In relation to the antenna switching, the transmission control unit 500 can make the above-stated determination using, for example, the reception quality information. In this case, the transmission control unit 500 acquires and records reception quality information per combination of the amplifier and the antenna. If the transmission control unit 500 recognizes degradation in the communication quality from the reception quality information for the current combination, the transmission control unit 500 instructs the route switch 508 to switch over antennas. Alternatively, if the acquired reception quality information slightly differs from the determination threshold, the transmission control unit 500 can instructs the route switch 508 to switch over antennas.

With the method stated above, it is possible to deal with the degradation in the reception quality due to presence of a radio shielding object halfway across the transmission.

Although the exemplary embodiments of the present invention have been described in detail, it should be understood that various changes, substitutions and alternatives can be made therein without departing from the spirit and scope of the invention as defined by the appended claims. Further, it is the inventor's intent to retain all equivalents of the claimed invention even if the claims are amended during prosecution.

An example 1 describes a transmitter comprising: a signal generation unit generating transmission signals by performing a signal processing, including coding and modulation, on data to be transmitted; a plurality of amplifiers amplifying the transmission signals by amplification characteristics having different saturated output powers, respectively; a plurality of antennas outputting the transmission signals amplified by the plurality of amplifiers, respectively; a switch connecting the plurality of amplifiers and the plurality of antennas in pairs; and a transmission control unit performing a test to determine antennas which are possible to output transmission signals each satisfying a predetermined reception quality from among the plurality of antennas, recognizing candidates of amplifiers connected to the antennas determined by the test, and selecting a specified number of amplifiers from among the candidates, wherein the transmission control unit sets higher ranks to candidates having the amplification characteristics of lower saturated output powers, applies the candidates given the higher ranks to the specified number of amplifiers, and performs a transmission processing using the specified number of amplifiers and the antennas connected to the specified number of amplifiers, respectively.

An example 2 describes the transmitter according to the example 1, wherein the plurality of antennas is arranged so as to differ in radiation direction of radio wave, and the transmission control unit selects the antennas to be connected to the specified number of amplifiers based on the arrangement from among the plurality of antennas, and controls the switch to connect the selected antennas to the specified number of amplifiers, respectively.

An example 3 describes the transmitter according to the example 1 or 2, wherein when the test is performed, the transmission control unit acquires reception quality information indicating a reception quality of each of the transmission signals output from the plurality of antennas from a receiver, and makes the determination of the antennas based on the reception quality information on each of the plurality of antennas.

An example 4 describes the transmitter according to the example 3, wherein the transmission control unit acquires CINR (Carrier to Interference plus Noise Ratio) as the reception quality information.

An example 5 describes the transmitter according to any one of the examples 1 to 4, wherein the transmission control unit changes a threshold value for the determination of the antennas in the test according to coding rate and modulation type applied to the signal generation unit.

An example 6 describes a transmission method comprising: performing a test to determine antennas which are possible to output transmission signals each satisfying a predetermined reception quality out of a plurality of antennas; recognizing candidates of amplifiers connected to the antennas determined by the test from among a plurality of amplifiers amplifying transmission signals by amplification characteristics having different saturated output powers, respectively; setting higher ranks to candidates having amplification characteristic of lower saturated output powers, and selecting a specified number of amplifiers from among the candidates given the higher ranks; generating transmission signals by performing a signal processing, including coding and modulation, on data to be transmitted; and performing a transmission processing on the generated transmission signals using the selected specified number of amplifiers and the antennas connected to the specified number of amplifiers, respectively.

An example 7 describes the transmission method according to the example 6, further comprising steps of arranging the plurality of antennas so as to differ in radiation direction of radio wave, and selecting the antennas to be connected to the specified number of amplifiers based on the arrangement of the plurality of antennas.

An example 8 describes the transmission method according to the example 6 or 7, wherein the test includes steps of acquiring reception quality information indicating a reception quality of each of the transmission signals output from the plurality of antennas from a receiver, and making the determination of the antennas based on the reception quality information on each of the plurality of antennas.

An example 9 describes the transmission method according to the example 8, wherein the reception quality information to be acquired from the receiver is CINR (Carrier to Interference plus Noise Ratio).

An example 10 describes the transmission method according to any one of the examples 6 to 9, wherein the test includes step of changing a threshold value for the determination of the antennas according to coding rate and modulation type applied to the signal processing.

An embodiment of the present invention may be summarized as follows.

A transmitter performs a test to determine antennas which are possible to output transmission signals each satisfying a predetermined reception quality out of among a plurality of antennas. The transmitter recognizes candidates of amplifiers connected to the antennas determined by the test from among a plurality of amplifiers amplifying transmission signals by amplification characteristics having different saturated output powers, respectively. The transmitter sets higher ranks to candidates having amplification characteristic of lower saturated output powers, and selects a specified number of amplifiers from among the candidates given the higher ranks. The transmitter performs a transmission processing on the transmission signals using the selected specified number of amplifiers and the antennas connected to the specified number of amplifiers, respectively.

**Claims**

1. A transmitter comprising:

   a signal generation unit generating transmission signals by performing a signal processing, including coding and modulation, on data to be transmitted;
   a plurality of amplifiers amplifying the transmission signals by amplification characteristics having different saturated output powers, respectively;
   a plurality of antennas outputting the transmission signals amplified by the plurality of amplifiers, respectively;
   a switch connecting the plurality of amplifiers and the plurality of antennas in pairs; and
   a transmission control unit performing a test to determine antennas which are possible to output transmission signals each satisfying a predetermined reception quality from among the plurality of antennas, recognizing candidates of amplifiers connected to the antennas determined by the test, and selecting a specified number of amplifiers from among the candidates,

   wherein the transmission control unit sets higher ranks to candidates having the amplification characteristics of lower saturated output powers, applies the candidates given the higher ranks to the specified number of amplifiers, and performs a transmission processing using the specified number of amplifiers and the antennas connected to the specified number of amplifiers, respectively.

2. The transmitter according to claim 1, wherein
   the plurality of antennas is arranged so as to differ in radiation direction of radio wave, and
   the transmission control unit selects the antennas to be connected to the specified number of amplifiers based on the arrangement from among the plurality of antennas, and controls the switch to connect the selected antennas to the specified number of amplifiers, respectively.

3. The transmitter according to claim 1 or 2,
   wherein when the test is performed, the transmission control unit acquires reception quality information indicating a reception quality of each of the transmission signals output from the plurality of antennas from a receiver, and makes the determination of the antennas based on the reception quality information on each of the plurality of antennas.

4. The transmitter according to claim 3,
   wherein the transmission control unit acquires CINR (Carrier to Interference plus Noise Ratio) as the reception quality information.

5. The transmitter according to any one of claims 1 to 4,
   wherein the transmission control unit changes a threshold value for the determination of the antennas in the test according to coding rate and modulation type applied to the signal generation unit.

6. A transmission method comprising:

   performing a test to determine antennas which are possible to output transmission signals each satisfying a predetermined reception quality out of a plurality of antennas;
   recognizing candidates of amplifiers connected to the antennas determined by the test from among a plurality of amplifiers amplifying transmission signals by amplification characteristics having different saturated output powers, respectively;
   setting higher ranks to candidates having amplification characteristic of lower saturated output powers, and selecting a specified number of amplifiers from among the candidates given the higher ranks;
   generating transmission signals by performing a signal processing, including coding and modulation, on data to be transmitted; and
   performing a transmission processing on the generated transmission signals using the selected specified number of amplifiers and the antennas connected to the specified number of amplifiers, respectively.

**7.** The transmission method according to claim 6, further comprising steps of
arranging the plurality of antennas so as to differ in radiation direction of radio wave, and
selecting the antennas to be connected to the specified number of amplifiers based on the arrangement of the plurality of antennas.

**8.** The transmission method according to claim 6 or 7, wherein the test includes steps of
acquiring reception quality information indicating a reception quality of each of the transmission signals output from the plurality of antennas from a receiver, and
making the determination of the antennas based on the reception quality information on each of the plurality of antennas.

**9.** The transmission method according to claim 8,
wherein the reception quality information to be acquired from the receiver is CINR (Carrier to Interference plus Noise Ratio).

**10.** The transmission method according to any one of claims 6 to 9, wherein the test includes step of changing a threshold value for the determination of the antennas according to coding rate and modulation type applied to the signal processing.

# FIG.1

507-1    507-N    50

508

ROUTE SWITCH

506-1    506-N

TRANSMISSION
POWER AMPLIFIER (1)    TRANSMISSION
POWER AMPLIFIER (N)

504

ANALOG SIGNAL
PROCESSING UNIT

503

DIGITAL-ANALOG CONVERSION
PROCESSING UNIT

502

MODULATION PROCESSING UNIT

501

CODING PROCESSING UNIT

SIGNAL GENERATION
UNIT

510

500

TRANSMISSION
CONTROL UNIT

SOURCE
INFORMATION
DATA

TRANSMISSION
CONTROL SIGNAL

# FIG. 2

# FIG. 3

SIGNAL POINT ARRANGEMENT
[QPSK, P_sat (1)]

TRANSMISSION POWER AMPLIFIER (1)

Imag
Real

TRANSMISSION POWER AMPLIFIER (2)

Imag
Real

TRANSMISSION POWER AMPLIFIER (3)

Imag
Real

TRANSMISSION POWER AMPLIFIER (4)

Imag
Real

# FIG. 4

SIGNAL POINT ARRANGEMENT
[QPSK, P_sat (4)]

TRANSMISSION POWER
AMPLIFIER (1)

Imag

Real

TRANSMISSION POWER
AMPLIFIER (2)

Imag

Real

TRANSMISSION POWER
AMPLIFIER (3)

Imag

Real

TRANSMISSION POWER
AMPLIFIER (4)

Imag

Real

FIG. 5

```
            ( START )
                |
                | S0
   ┌────────────────────────┐
   │       RECOGNIZE         │
   │   DATA TRANSMISSION     │
   │        REQUEST          │
   └────────────────────────┘
                |
                |            S1
              /    \
            /        \
          /  SAVING   \
  No  ◄──   MODE ?      ──
          \           /
            \        /
              \    /
                |
                | Yes           S2
   ┌────────────────────────┐
   │        TRANSMIT         │
   │       TEST PACKET       │
   └────────────────────────┘
                |
                |              S3
   ┌────────────────────────┐
   │        ACQUIRE          │
   │   RECEPTION QUALITY     │
   │     INFORMATION         │
   └────────────────────────┘
                |
                |              S4
   ┌────────────────────────┐
   │        DECIDE           │
   │      AMPLIFIERS         │
   │     AND ANTENNAS        │
   │       USED FOR          │
   │     TRANSMISSION        │
   │      PROCESSING         │
   └────────────────────────┘
                |
                |              S5
   ┌────────────────────────┐
   │         START           │
   │     TRANSMISSION        │
   │      PROCESSING         │
   └────────────────────────┘
                |
             ( END )
```

**FIG. 6**

S4

COMPARE RECEPTION CINR
WITH THRESHOLD CINR — S11

RECEPTION CINR
> THRESHOLD — S12

No

Yes

RECOGNIZE AMPLIFIER
CORRESPONDING TO
THE RECEPTION CINR
AS CANDIDATE — S13

JUDGE
ALL RECEPTION
CINRs (1, 2, 3, 4)? — S14

No

Yes

SET HIGHER RANKS
TO CANDIDATES OF
LOWER POWER CONSUMPTION
┌ HIGHEST : AMP(4) ┐
│ SECOND : AMP(2) │
└ LOWEST : AMP(1) ┘ — S15

SELECT AMPLIFIERS
AS MANY AS
THE NUMBER OF ANNTENAS
BASED ON THE RANKS — S16

END

EP 2 012 444 A2

## FIG.7

TRANSMISSION POWER AMPLIFIER (1) — 13-1

TRANSMISSION POWER AMPLIFIER (N) — 13-N

15-1 ··· 15-N

100

ANALOG SIGNAL PROCESSING UNIT — 12

DIGITAL-ANALOG CONVERSION SIGNAL PROCESSING UNIT — 11

DIGITAL SIGNAL PROCESSING UNIT — 10

SOURCE INFORMATION DATA

19

# FIG.8

POWER CONSUMPTION

GAIN

STRAIN

BACK-OFF

GAIN, POWER CONSUMPTION

STRAIN-ALLOWABLE OUTPUT POWER

SATURATED OUTPUT POWER

OUTPUT SIGNAL POWER ⟶

# FIG.9

POWER

SPECIFIED SPECTRUM

SPECTRUM

BAND

CENTRAL FREQUENCY

FREQUENCY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007176210 A
- JP 2005534268 A